# EUROPEAN PATENT APPLICATION

(11) **EP 4 184 178 A1**
(43) Date of publication of application: **24.05.2023**
(21) Application number: 21208999.9
(22) Date of filing: 18.11.2021
(51) Int. Cl.: G01N 35/10

(54) **METHOD FOR CONTROLLING AN ANTI DROPLET SYSTEM OF A PIPETTOR AND PIPETTOR WITH ANTI DROPLET SYSTEM CONTROL**

(71) Applicant: F. Hoffmann-La Roche AG, 4070 Basel (CH); Roche Diagnostics GmbH, 68305 Mannheim (DE)
(72) Inventor: DALCANALE, Federico, 4132 Muttenz (CH); GOUDIE, Simon, 6343 Rotkreuz ZG (CH); HRADETZKY, David, 4132 Muttenz (CH); LEWANDOWSKA, Dagmara Wanda, 6343 Rotkreuz ZG (CH); MEIER, Alexander, 6343 Rotkreuz ZG (CH); ZGRAGGEN, Sabrina, 6343 Rotkreuz ZG (CH)
(74) Representative: Merkel, Patrick

(57) **Abstract**

A method for controlling an anti droplet system of a laboratory system or device comprising at least one air displacement pipettor with a pressure sensor and a control unit for controlling operation of the pipettor, the method comprising the following steps controlling the pipettor to be moved such that the pipettor tip is immerged in a fluid to be aspirated, aspirate a predetermined volume of fluid, move the pipettor such that the pipettor tip is emerged from the fluid, continuously monitoring the pressure above the fluid column in the pipettor tip and generating pressure curve over time, and determining if a pressure increase above the fluid column has been detected.

## Description

### Field of the Invention

The invention relates to a method for controlling an anti droplet system of a pipettor and a pipettor with an implemented control for an anti droplet system. The invention further relates to a computer program product and a computer-readable storage.

### Background

Transfer of fluids by means of a pipettor is a crucial and critical step in laboratory system and devices. Not only it should be guaranteed that the exact amount of fluid is pipetted and dispensed, but also that no fluid is lost during processing, since this can lead to cross contamination of samples and therefore to false results.

One of the most known issues in pipettors is dripping. Dripping is caused by the increase of vapor pressure inside the tip of the pipettor due to evaporation of the aspirated fluid. This problem is most severe for volatile fluids with a high vapor pressure. The increase of the vapor pressure inside the tip of the pipettor causes the fluid do be displaced towards the opening of the tip, creating a droplet that can, under circumstances, drop and causes not only inaccuracies due to the loss of volume of the aspirated fluid, but may lead to cross contamination.

However, depending on the laboratory system or device operated, only a small amount of fluids is subject to dripping. The most frequent fluids being serum and plasma. Under normal laboratory conditions these fluids can be safely pipetted, as long as the time the fluid is held in the pipettor does not exceeds a given time.

Under certain laboratory conditions (which are typically allowed according to specifications), safe pipetting of serum and plasma is not ensured. The problem is especially severe when a multipipettor is used, and the time between aspiration and dispensing of the multiple fluids is prolonged, e.g. because the aspiration of the multiple fluids cannot be done in parallel, but only sequentially, or a clot is detected when aspirating a fluid. In this case, a clot handling workflow is executed, which typically takes longer than the normal fluid transfer does because the pipetting tip with the clotted sample has to be disposed.

In addition, modern laboratory system and devices that are fully automated have a closed working area due to security reasons (multiple robotic handlers moving, avoid contamination, user safety), and, depending on the type of the system or device, the conditions inside the working area may drastically differ from the outside laboratory condition. As an example, in fully automated nucleic acid analyzers, after several hours of operation, due to the presence of heat generating components such as thermal incubators and thermocyclers, the temperature is generally higher and the relative humidity lower than in the laboratory.

A known method to avoid dripping is to monitor the pressure inside the tip of the pipettor by means of a pressure sensor. After aspiration of the fluid, the pressure is continuously monitored and adjusted in case the pressure raises by moving the plunger of the pipettor, therefore avoiding drop formation and dripping. While this process can actively avoid dripping of the fluid, it can lead to pipetting inaccuracies, in particular when liquid under normal laboratory conditions is not subject to dripping. In some cases, the environmental conditions in the working area can lead to a pressure drop instead of a pressure increase in the pipettor tip, therefore increasing pipetting errors.

As an additional or alternative measure, a trailing air gap may be used. A trailing air gap is air which is aspirated after aspiration of the fluid. When the pipettor tip has been raised from the fluid surface, the pipettor is activated again and a small volume of air is aspirated. This small amount of air is called trailing air gap and acts as a volume buffer inside the pipette tip, allowing for a certain fluid displacement towards the pipettor tip opening casued by a pressure increase above the fluid column.

It is therefore aim of the present invention to provide a method and a laboratory system or device with an high pipetting accuracy, while at the same time avoiding dripping of fluid during pipetting.

This problem is solved with a method and a laboratory system or device according to the independent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to the present invention, the laboratory system or device comprises at least one air displacement pipettor arranged in a working area of the laboratory system or device, wherein the displacement pipettor comprises a pressure sensor for monitoring the pressure above a fluid column in a pipettor tip.

The pipettor according to the present invention is therefore capable of being operated with an anti droplet system as cited above and which will be disclosed again later.

The system or device further comprises a control unit for controlling operation of the pipettor. The control unit may be a dedicated control unit of the pipettor and be controlled by an higher ranked control system or may be integrated in a control system, e.g. a computer, of the laboratory system or device.

The control unit is connected with the pipettor and is configured to operate the pipettor, in particular to displace air within a pipettor tip to aspirate/deliver fluid. Air displacement is preferably performed by means of a movable plunger as known in the art. The pressure sensor is also connected to the control unit as will be explained later on.

The control unit controls the pipettor to be moved such that the pipettor tip is immerged in a fluid to be aspirated. The pipettor tip is generally immerged in the fluid such that a predetermined volume of fluid can be continuously aspirated without air.

Then, the pipettor is operated by the control unit to aspirate a predetermined volume of fluid by displacing air inside the pipette tip.

Subsequently, the pipettor is moved such that the pipettor tip is emerged from the fluid that has been aspirated after the predetermined amount of fluid has been aspirated.

The control unit then controls the pipettor to aspirate a predetermined volume of air by displacing air above the aspirated fluid column, therefore providing the above described trailing air gap (TAG).

According to the present invention the the pressure above the fluid column in the pipettor tip is continuously monitored by the control unit by means of the pressure sensor and a pressure curve over time is generated by the control unit. Monitoring of the pressure is performed simultaneously to the steps described above and below and the pressure curve is generated in real time.

The control unit then determines if a pressure increase above the fluid column has been detected in a period of time between emersion the pipettor tip from the fluid and aspiration of the predetermined volume of air.

The control unit then activates an anti droplet system of the pipettor if said pressure increase has been determined.

With such a method or system or device, it is possible to only activate the anti droplet control system when necessary, without the risk that the anti droplet control system could influence the pipetting accuracy as explained above because the environment in the working area is not considered critical for drop formation.

As explained above, every anti droplet control system known in the art may be used with the present invention, however, the preferred anti droplet control system comprises monitoring the pressure above a fluid column in the pipettor tip during operation of the pipettor. The control unit, which is connected to the pressure sensor, is therefore capable of monitoring in real time the pressure in the pipettor. If a pressure increase over a predetermined threshold above the fluid column in the pipettor tip is determined by the control unit, then the pipettor is controlled to decrease the pressure above the fluid column below the predetermined threshold by displacing air above the fluid column, e.g. by displacing the plunger of the pipettor.

Therefore, drop formation at the pipettor tip may be avoided.

Preferably, determining if a pressure increase above the fluid column has been detected is performed by determining if the pressure curve has raised above a predetermined threshold pressure value.

Alternatively determining if a pressure increase above the fluid column has been detected is performed by determining if a pressure curve slope is above a predetermined threshold pressure curve slope. The pressure curve slope may be determined by known mathematical methods. A simple implementation could be to determine the slope of a line drawn between two measured pressures, the first point being the pressure after emersion of the pipettor tip from the fluid and the second point being the pressure just before aspiration of the predetermined volume of air is started.

As the pressure above the fluid column is monitored continuously, it could be possible to monitor the pressure curve after emersion of the pipettor tip from the fluid, but before aspiration of the predetermined volume of air is started. In this case, it is only determined if a pressure increase above the fluid column has been detected in this time period, and in this case, no aspiration of air would be performed, but the anti droplet control system would be activated. The time period is preferably under 2 seconds, more preferably under 1,5 seconds, even more preferred under 1,25 seconds. Preferably, the threshold for determining the pressure increase is a second threshold being higher of the first threshold.

Although described with respect to the method according to the present invention, the above description applies accordingly to the system or device, the computer program product and the computer readable medium according to the present invention.

### Short description of the figures

- **Fig. 1**: depicts a schematic pressure curve where no pressure increase has been detected, and
- **Fig. 2**: depicts a schematic pressure curve where a pressure increase has been detected.

### Detailed description of the figures

The invention will be described now by way of preferred embodiments in connection with the drawings.

According to the present invention, the laboratory system or device comprises at least one air displacement pipettor arranged in a working area of the laboratory system or device, wherein the displacement pipettor comprises a pressure sensor for monitoring the pressure above a fluid column in a pipettor tip.

The pipettor according to the present invention is therefore capable of being operated with an anti droplet system as cited above and which will be disclosed again later.

The system or device further comprises a control unit for controlling operation of the pipettor. The control unit may be a dedicated control unit of the pipettor and be controlled by an higher ranked control system or may be integrated in a control system, e.g. a computer, of the laboratory system or device.

The control unit is connected with the pipettor and is configured to operate the pipettor, in particular to displace air within a pipettor tip to aspirate/deliver fluid. Air displacement is preferably performed by means of a movable plunger as known in the art. The pressure sensor is also connected to the control unit as will be explained later on.

The control unit controls the pipettor to be moved such that the pipettor tip is immerged in a fluid to be aspirated. The pipettor tip is generally immerged in the fluid such that a predetermined volume of fluid can be continuously aspirated without air.

Then, the pipettor is operated by the control unit to aspirate a predetermined volume of fluid by displacing air inside the pipette tip.

Subsequently, the pipettor is moved such that the pipettor tip is emerged from the fluid that has been aspirated after the predetermined amount of fluid has been aspirated.

The control unit then controls the pipettor to aspirate a predetermined volume of air by displacing air above the aspirated fluid column, therefore providing the above described trailing air gap (TAG).

According to the present invention the the pressure above the fluid column in the pipettor tip is continuously monitored by the control unit by means of the pressure sensor and a pressure curve over time is generated by the control unit. Monitoring of the pressure is performed simultaneously to the steps described above and below and the pressure curve is generated in real time.

The control unit then determines if a pressure increase above the fluid column has been detected in a period of time between emersion the pipettor tip from the fluid and aspiration of the predetermined volume of air.

The control unit then activates an anti droplet system of the pipettor if said pressure increase has been determined.

With such a method or system or device, it is possible to only activate the anti droplet control system when necessary, without the risk that the anti droplet control system could influence the pipetting accuracy as explained above because the environment in the working area is not considered critical for drop formation.

As explained above, every anti droplet control system known in the art may be used with the present invention, however, the preferred anti droplet control system comprises monitoring the pressure above a fluid column in the pipettor tip during operation of the pipettor. The control unit, which is connected to the pressure sensor, is therefore capable of monitoring in real time the pressure in the pipettor. If a pressure increase over a predetermined threshold above the fluid column in the pipettor tip is determined by the control unit, then the pipettor is controlled to decrease the pressure above the fluid column below the predetermined threshold by displacing air above the fluid column, e.g. by displacing the plunger of the pipettor.

Therefore, drop formation at the pipettor tip may be avoided.

Preferably, determining if a pressure increase above the fluid column has been detected is performed by determining if the pressure curve has raised above a predetermined threshold pressure value.

Alternatively determining if a pressure increase above the fluid column has been detected is performed by determining if a pressure curve slope is above a predetermined threshold pressure curve slope. The pressure curve slope may be determined by known mathematical methods. A simple implementation could be to determine the slope of a line drawn between two measured pressures, the first point being the pressure after emersion of the pipettor tip from the fluid and the second point being the pressure just before aspiration of the predetermined volume of air is started.

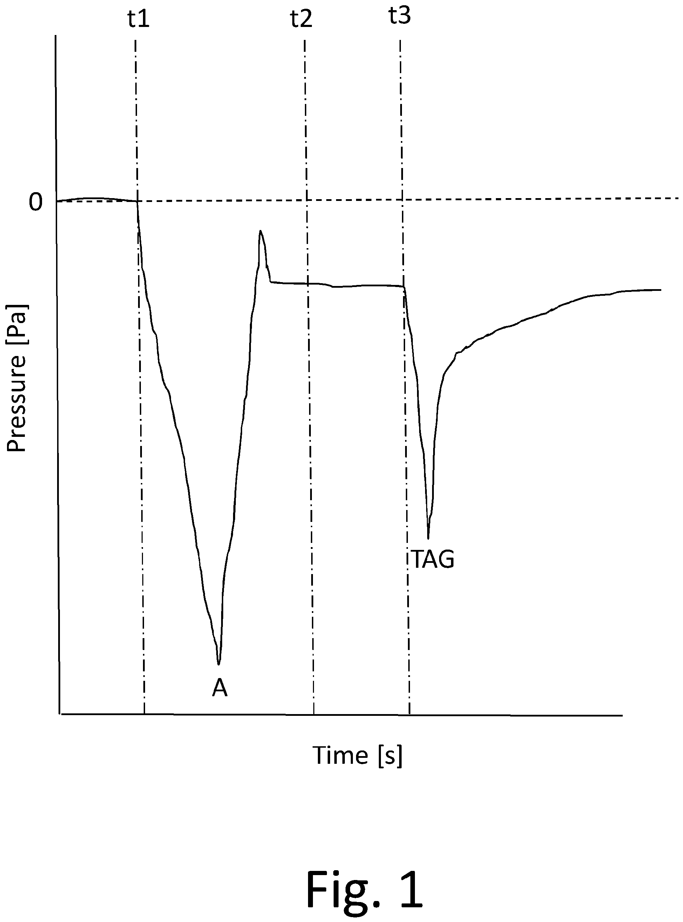

Figure 1 shows schematically and not to scale a pressure curve determined by the control unit by means of the pressure sensor of the pipettor.

At a time 0, the system or device is started and the pipettor is moved. The pipettor tip is immerged in the fluid to be aspirated and a time t1, aspiration is started. The aspiration is characterized by a spike denoted A which reaches a maximum negative pressure and then raises again. After aspiration of the fluid, the pipettor is raised and at time t2, the pipettor tip emerges from the fluid. After a predetermined time interval t2-t3, aspiration of air is started at time t3, and is denoted by the spike TAG. As can be seen from figure 1, the pressure curve between the time t2 and t3 is flat. The control unit therefore determines that no pressure increase has been detected and therefore, no anti droplet control system should be activated.

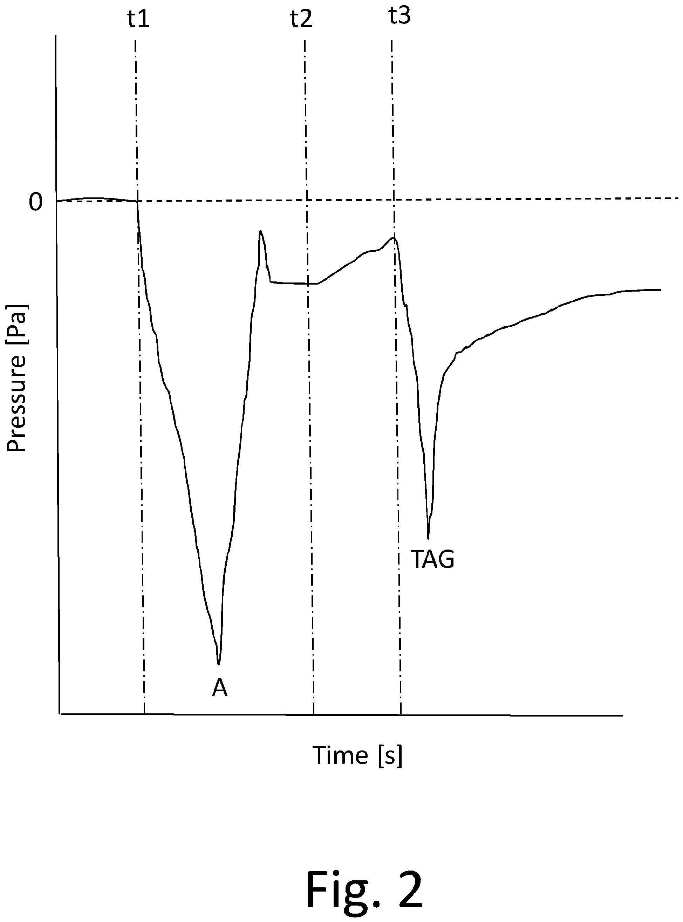

In figure 2, a process similar to figure 1 is shown. At a time 0, the system or device is started and the pipettor is moved. The pipettor tip is immerged in the fluid to be aspirated and a time t1, aspiration is started. The aspiration is characterized by a spike denoted A which reaches a maximum negative pressure and then raises again. After aspiration of the fluid, the pipettor is raised and at time t2, the pipettor tip emerges from the fluid. After a predetermined time interval t2-t3, aspiration of air is started at time t3, and is denoted by the spike TAG. In this case however, the pressure curve between time t2 and t3 shows an increase of the pressure above the fluid column. The control unit therefore determines that a pressure increase has been detected and therefore, no anti droplet control system should be activated.

## Claims

1. A method for controlling an anti droplet system of a laboratory system or device, the laboratory system or device comprising:
- at least one air displacement pipettor, wherein the displacement pipettor comprises a pressure sensor for monitoring the pressure above a fluid column in a pipettor tip,
- a control unit for controlling operation of the pipettor,
the method comprising the following steps
- the control unit controlling the pipettor to be moved such that the pipettor tip is immerged in a fluid to be aspirated,
- the control unit controlling the pipettor to aspirate a predetermined volume of fluid by displacing air inside the pipette tip,
- the control unit controlling the pipettor to be moved such that the pipettor tip is emerged from the fluid that has been aspirated,
- the control unit controlling the pipettor to aspirate a predetermined volume of air by displacing air above the aspirated fluid column,
- the control unit continuously monitoring the pressure above the fluid column in the pipettor tip and generating pressure curve over time,
- the control unit determining if a pressure increase above the fluid column has been detected in a period of time between emersion the pipettor tip from the fluid and aspiration of the predetermined volume of air, and
- the control unit activating an anti droplet system of the pipettor if said pressure increase has been determined.

2. The method of claim 2, wherein the anti droplet system of the pipettor comprises the following steps:
- monitoring the pressure above a fluid column in the pipettor tip,
- determining a pressure increase above the fluid column in the pipettor tip over a predetermined threshold, and
- decreasing the pressure above the fluid column below the predetermined threshold by displacing air above the fluid column.

3. The method of claim 1 or 2, wherein determining if a pressure increase above the fluid column has been detected is performed by determining if the pressure curve has raised above a predetermined threshold pressure value.

4. The method of any of the preceding claims, wherein determining if a pressure increase above the fluid column has been detected is performed by determining if a pressure curve slope is above a predetermined threshold pressure curve slope.

5. A laboratory system or device, comprising:
- at least one air displacement pipettor, wherein the displacement pipettor comprises a pressure sensor for monitoring the pressure above a fluid column in a pipettor tip,
- a control unit for controlling operation of the pipettor,
wherein the control unit is configured to:
- control the pipettor to be moved such that the pipettor tip is immerged in a fluid to be aspirated,
- control the pipettor to aspirate a predetermined volume of fluid by displacing air inside the pipette tip,
- control the pipettor to be moved such that the pipettor tip is emerged from the fluid that has been aspirated,
- control the pipettor to aspirate a predetermined volume of air by displacing air above the aspirated fluid column,
- continuously monitoring the pressure above the fluid column in the pipettor tip and generating pressure curve over time,
- determine if a pressure increase above the fluid column has been detected in a period of time between emersion the pipettor tip from the fluid and aspiration of the predetermined volume of air, and
- activate an anti droplet system of the pipettor if said pressure increase has been determined.

6. The system or device of claim 5, wherein the control unit is further configured to control an anti droplet system of the pipettor by:
- monitoring the pressure above a fluid column in the pipettor tip,
- determining a pressure increase above the fluid column in the pipettor tip over a predetermined threshold, and
- decreasing the pressure above the fluid column below the predetermined threshold by displacing air above the fluid column.

7. The system or device of claim 5 or 6, wherein the control unit determines if a pressure increase above the fluid column has been detected by determining if the pressure curve has raised above a predetermined threshold pressure value.

8. The system or device of one of the claims 5 to 7, wherein the control unit determines if a pressure increase above the fluid column has been detected by determining if a pressure curve slope is above a predetermined threshold pressure curve slope.

9. A computer program product comprising instructions to cause the device according to any one of claims 5 to 8 to execute the steps of the method according to any one of claims 1 to 4.

10. A computer-readable storage medium having stored thereon the computer program product of claim 9.
